# EUROPEAN PATENT APPLICATION

(11) **EP 2 790 449 A1**
(43) Date of publication of application: **15.10.2014**
(21) Application number: 12854732.0
(22) Date of filing: 29.11.2012
(51) Int. Cl.: H04W 68/12, H04W 48/18, H04W 88/10

(54) **WIRELESS BASE STATION AND METHOD FOR CONTROLLING TRANSITION BETWEEN WIRELESS SYSTEMS**

(30) Priority: 09.12.2011 JP 2011270715
(71) Applicant: NTT DOCOMO, INC., Chiyoda-ku Tokyo 100-6150 (JP)
(72) Inventor: TESHIMA, Kunihiko, Tokyo 1006150 (JP); MASUDA, Masafumi, Tokyo 1006150 (JP); AKAI, Yuji, Tokyo 1006150 (JP); KANETAKA, Yasuhiro, Tokyo 1006150 (JP)
(74) Representative: HOFFMANN EITLE
(86) International application number: PCT/JP2012/080991
(87) International publication number: WO 2013/084799

(57) **Abstract**

A radio base station capable of communication in a first radio system and a second radio system includes an estimation unit arranged to measure information transmitted from a mobile station and estimate a propagation condition between the mobile station and the radio base station when transition from the second radio system to the first radio system is requested; and a determination unit arranged to determine whether measurement of a radio wave is needed upon transition by the mobile station from the second radio system to the first radio system based on the propagation condition estimated by the estimation unit.

## Description

### TECHNICAL FIELD

The present invention relates to a radio base station and a method of controlling transition between radio systems.

### BACKGROUND ART

A mobile communication system called a "W-CDMA (Wideband-Code Division Multiple Access) system" has been recently proposed and standardized by 3GPP (The 3rd Generation Partnership Project). In addition, a mobile communication system called an "LTE (Long Term Evolution) system" has been proposed and standardized, which aims to enhance a W-CDMA system.

Both of a W-CDMA system and an LTE system belong to a cellular-based mobile communication system. Specifically, an area called a "cell", within which cellular-based control is carried out, is formed by a radio wave transmitted from a radio base station.

In addition to a radio base station to cover a wide outdoor area, a small radio base station (hereinafter called a "femto-cell base station) has been deployed in order to mainly cover a narrow area such as an indoor area. As used herein, a cell formed by an outdoor radio base station is called a "macro cell" and a cell formed by a femto-cell base station is called a "femto cell". A femto-cell base station measures a reception level of a macro cell and determines transmission power based on the measurement result. A femto-cell base station is deployed in a house, a small office, or the like to provide a small coverage area, to utilize a low-cost IP (Internet Protocol) line for a home user for connecting to a radio control station, and so on. By using one or more femto cells to form a private area for a particular user, user-specific services are under consideration to provide a different billing plan for the particular user in the femto cells, to provide additional functions limited to the femto cells, and so on.

In addition to a femto-cell base station which supports either a W-CDMA system or an LTE system, a femto-cell base station which supports both of these systems (hereinafter called a "dual femto-cell base station") is under consideration. When a mobile station which supports both a W-CDMA system and an LTE system is situated within a cell formed by the dual femto-cell base station, the mobile station can dynamically use both of these systems. For example, a circuit switching service for voice communication is not provided in an LTE system. In this case, when the mobile station situated in the LTE system performs voice communication, the mobile station needs to transition to a W-CDMA system. This transition is called "CSFB" (Circuit Switched Fallback) (see Itsuma Tanaka, et. al., "CS Fallback Function for Combined LTE and 3G Circuit Switched Services", NTT DOCOMO Technical Journal, Vol. 17, No. 3, October, 2009).

### DISCLOSURE OF INVENTION

### [PROBLEM(S) TO BE SOLVED BY THE INVENTION]

In one CSFB scheme, CSFB can be performed without measuring quality of a cell (W-CDMA cell) in a W-CDMA system. This CSFB scheme is called "CSFB according to Blind HO" (Blind Handover). On the other hand, in another CSFB scheme, CSFB can be performed after measuring quality of a W-CDMA cell. This CSFB scheme is called "CSFB accompanied by a Measurement Procedure". It is expected that which of these schemes is used for CSFB will be uniformly specified in each cell by station data (configuration data stored in a station).

If the station data uniformly specifies which of CSFB according to Blind HO and CSFB accompanied by a Measurement Procedure is used for CSFB in each cell, all mobile stations situated in the cell perform either CSFB according to Blind HO or CSFB accompanied by a Measurement Procedure based on the station data configured in a radio base station associated with the cell. In addition, if CSFB according to Blind HO is specified, all mobile stations situated in the cell make transition to the cell specified by the station data configured in the radio base station associated with the cell.

Since voice communication typically requires little delay, the use of CSFB according to Blind HO is contemplated.

CSFB according to Blind HO is superior in terms of delay, because there is no need to measure quality of a W-CDMA cell. CSFB according to Blind HO is based on the precondition that there are W-CDMA cells in the areas covered by LTE cells. For a dual femto-cell base station, on the other hand, the areas covered by W-CDMA cells are not necessarily identical with the areas covered by LTE cells, because transmission power is determined based on a reception level of a macro cell. For example, when a reception level of a W-CDMA macro cell in the neighborhood of the dual femto-cell base station is better, transmission power of the dual femto-cell base station for the W-CDMA system becomes lower and accordingly, a W-CDMA cell formed by the dual femto-cell base station becomes smaller. As a result, when a mobile station situated near the cell edge of the LTE system performs CSFB according to Blind HO, CSFB may end in failure because there is no W-CDMA cell.

As mentioned above, the CSFB scheme can be configured in each cell by station data. However, it is not efficient from the viewpoint of operational costs and labor costs to measure, for each femto-cell base station, a radio wave in a macro cell to configure the CSFB scheme, because the number of femto-cell base stations is much larger than the number of macro-cell base stations.

It is a general object of the present invention to provide a radio base station and a method of controlling transition between radio systems to autonomously determine, based on a propagation condition such as a path loss value between a mobile station and the radio base station, whether measurement of a radio wave is needed upon transition between radio systems such as upon CSFB.

### [MEANS FOR SOLVING THE PROBLEM(S)]

In order to achieve the object of the present invention, there is provided a radio base station capable of communication in a first radio system and a second radio system, comprising:
an estimation unit arranged to measure information transmitted from a mobile station and estimate a propagation condition between the mobile station and the radio base station when transition from the second radio system to the first radio system is requested; and
a determination unit arranged to determine whether measurement of a radio wave is needed upon transition by the mobile station from the second radio system to the first radio system based on the propagation condition estimated by the estimation unit.

In addition, there is provided a method of controlling transition between radio systems in a radio base station capable of communication in a first radio system and a second radio system, comprising the steps of:
measuring information transmitted from a mobile station and estimating a propagation condition between the mobile station and the radio base station when transition from the second radio system to the first radio system is requested; and
determining whether measurement of a radio wave is needed upon transition by the mobile station from the second radio system to the first radio system based on the propagation condition estimated in the measuring and estimating step.

### [ADVANTAGEOUS EFFECT OF THE INVENTION]

According to the present invention, a radio base station can autonomously determine whether measurement of a radio wave is needed upon transition between radio systems based on a propagation condition such as a path loss value between a mobile station and the radio base station.

### BRIEF DESCRIPTION OF THE DRAWINGS

Fig. 1 shows an exemplary configuration of a W-CDMA system in accordance with an embodiment of the present invention.
Fig. 2 shows an exemplary configuration of an LTE system in accordance with to an embodiment of the present invention.
Fig. 3 shows a flowchart of a CSFB procedure.
Fig. 4 shows sizes of a W-CDMA cell and an LTE cell formed by a dual femto-cell base station.
Fig. 5 shows a functional block diagram of a radio base station in accordance with an embodiment of the present invention.
Fig. 6 shows a flowchart of determining whether measurement is needed upon CSFB in accordance of the present invention.
Fig. 7 shows a flowchart of determining whether measurement is needed upon CSFB in accordance of the present invention (in the case where a reference value is updated).

### DETAILED DESCRIPTION OF THE PREFERRED EMBODIMENTS

In an embodiment of the present invention, a radio base station capable of communication in a plurality of radio systems is used. For example, the radio base station may be a dual femto-cell base station which supports both a W-CDMA system and an LTE system.

A mobile station in communication with the radio base station may make transition between radio systems. For example, the mobile station situated in the LTE system may make transition to the W-CDMA system for voice communication. In the embodiment of the present invention, the radio base station measures information (signal) transmitted from the mobile station and estimates a propagation condition between the mobile station and the radio base station when transition between radio systems is requested. For example, the radio base station estimates a path loss value or a propagation loss for the mobile station.

The radio base station determines whether measurement of a radio wave is needed upon transition by the mobile station between radio systems. For example, when the estimated path loss value is above a reference value, the radio base station determines that measurement of a radio wave is needed upon transition by the mobile station between radio systems.

An embodiment of the present invention is described below with reference to the accompanying drawings.

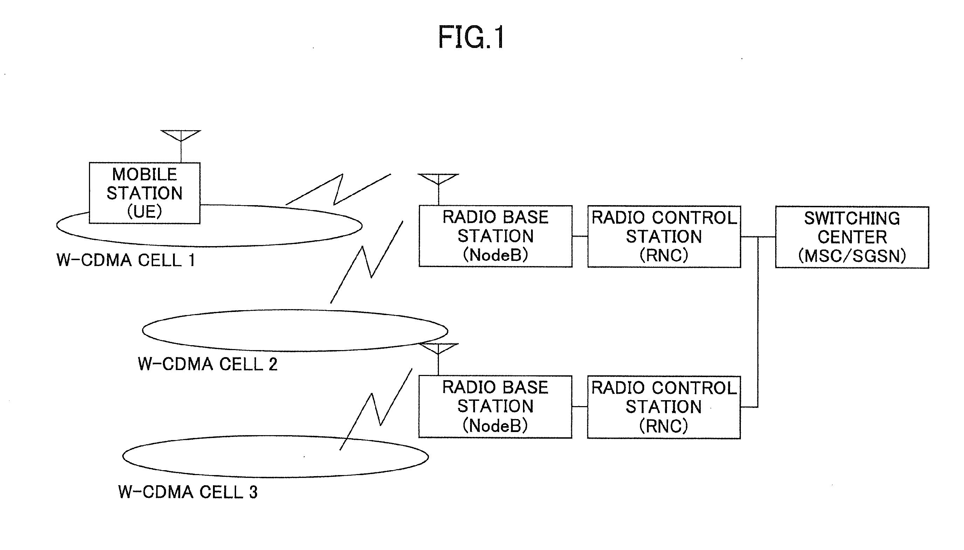

Fig. 1 shows an exemplary configuration of a W-CDMA system in accordance with an embodiment of the present invention. The W-CDMA system includes a mobile station (UE: User Equipment), a radio base station (NodeB), a radio control station (RNC: Radio Network Controller), and a switching center (MSC/SGSN: Mobile Switching Center/Serving GPRS Support Node). In the W-CDMA system, a circuit switching (CS) service and a packet switching (PS) service are provided to the mobile station. In the W-CDMA system, cellular-based mobile communication system is configured. More specifically, cells (for example, a W-CDMA cell 1, a W-CDMA cell 2, and a W-CDMA cell 3 shown in Fig. 1) are formed by radio waves transmitted from the radio base stations. The radio base station may be a radio base station which forms a macro cell or a femto-cell base station which forms a femto cell.

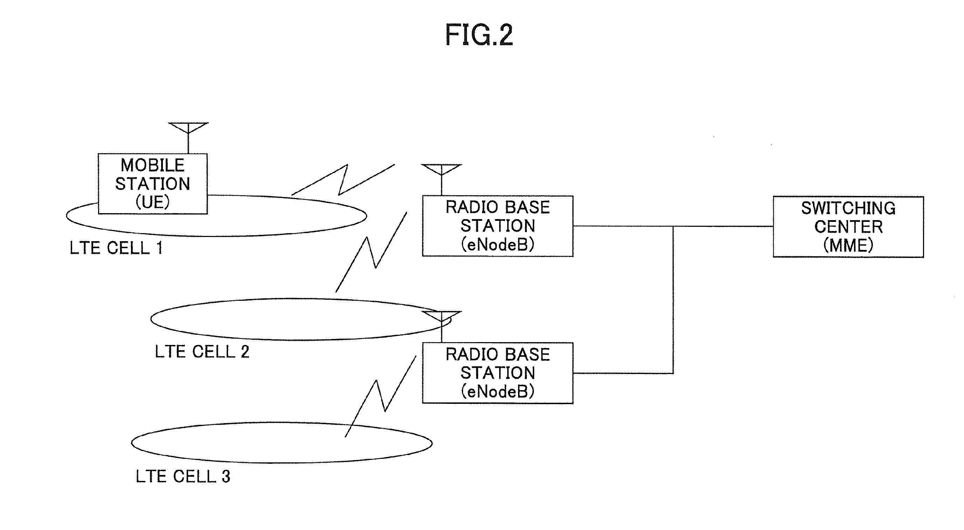

Fig. 2 shows an exemplary configuration of an LTE system in accordance with to an embodiment of the present invention. The LTE system includes a mobile station (UE), a radio base station (eNodeB), and a switching center (MME: Mobility Management Entity). The functions provided by the radio control station in the W-CDMA system are included in the radio base station or the switching center in the LTE system. In the LTE system, a packet switching service is provided to the mobile station. In the LTE system, cellular-based mobile communication system is also configured. More specifically, cells (for example, an LTE cell 1, an LTE cell 2, and an LTE cell 3 shown in Fig. 2) are formed by radio waves transmitted from the radio base stations. The radio base station may be a radio base station which forms a macro cell or a femto-cell base station which forms a femto cell.

It should be noted that an embodiment of the present invention can be applied to both the case where a radio control station is provided separately from a radio base station and a switching center as shown in Fig. 1 and the case where no radio control station is provided as shown in Fig. 2.

For example, when a circuit switching service such as a voice communication service is not provided in an LTE system, a mobile station situated in the LTE system needs to transition to a W-CDMA system for voice communication. In other words, CSFB is needed.

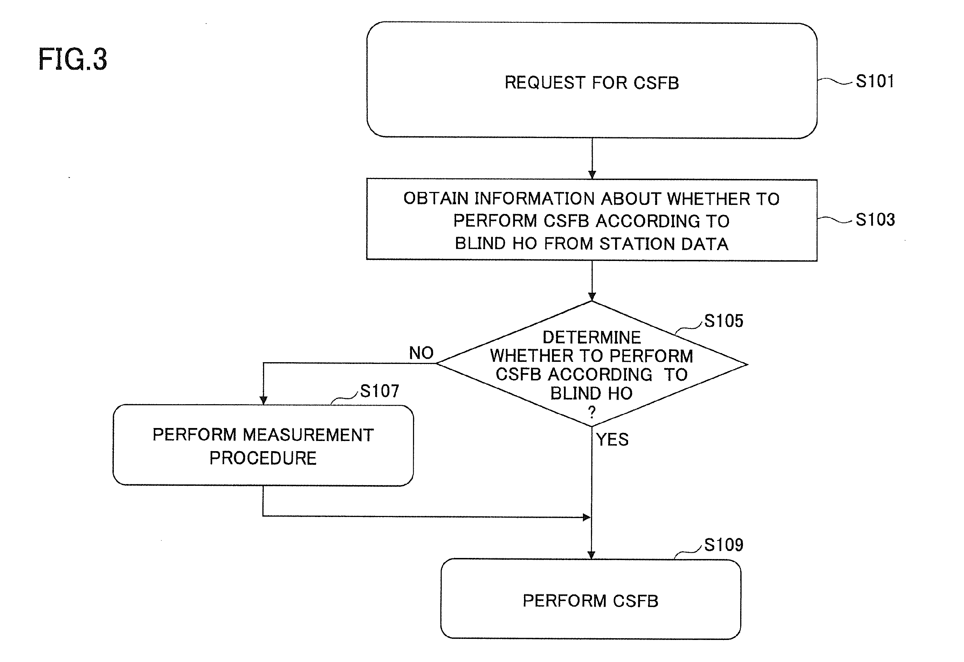

Fig. 3 shows a flowchart of a CSFB procedure. When a request for originating or receiving a call of a CS service is made to a mobile station situated in an LTE system, a radio base station receives a request for CSFB from a switching center (step S101).

Station data in the radio base station includes whether to perform CSFB without measuring quality of a W-CDMA cell (to perform CSFB according to Blind HO) or to perform CSFB after measuring quality of a W-CDMA cell (to perform CSFB accompanied by a Measurement Procedure). The radio base station obtains the station data (step S103).

When CSFB according to Blind HO is not to be performed, in other words, when CSFB according to a Measurement Procedure is to be performed (step S105: NO), the radio base station performs a Measurement Procedure (step S107), in which quality of the W-CDMA cell is measured. Then, CSFB is performed and the mobile station makes transition to the W-CDMA system (step S109).

When CSFB according to Blind HO is to be performed (step S105: YES), CSFB is performed without a Measurement Procedure and the mobile station makes transition to the W-CDMA system (step S109).

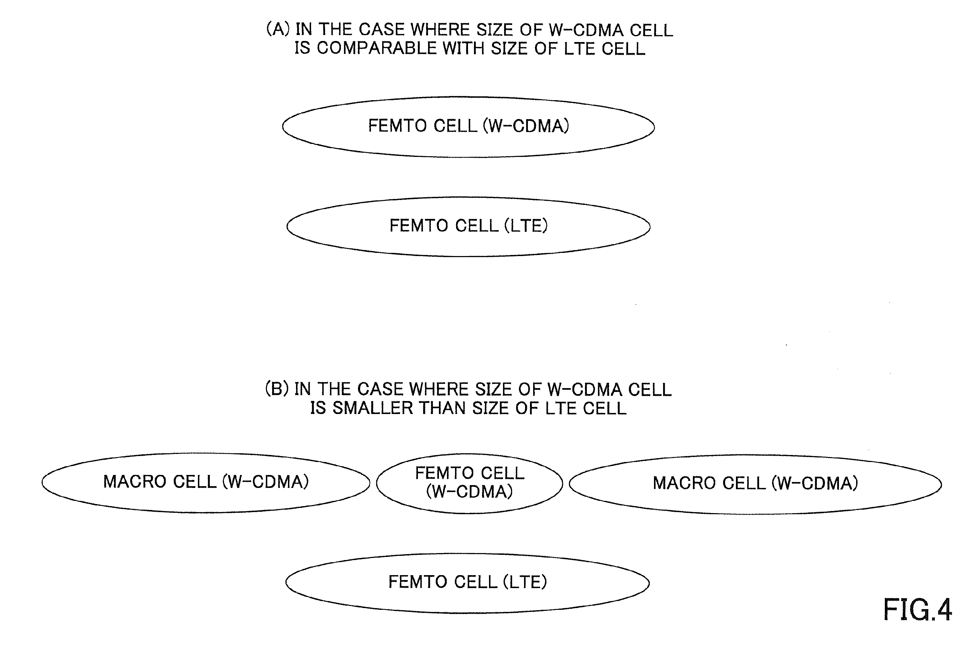

As understood from Fig. 3, CSFB according to Blind HO is suitable for voice communication which requires little delay, because there is no need to measure quality of a W-CDMA cell (step S107). However, when there is no W-CDMA cell in the area covered by an LTE cell, CSFB according to Blind HO may end in failure. This scenario is described below with reference to Fig. 4.

Fig. 4 shows sizes of a W-CDMA cell and an LTE cell formed by a dual femto-cell base station. The dual femto-cell base station determines transmission power based on a reception level of a macro cell in order to reduce effects on a radio wave in the macro cell. For example, when there is no neighbor W-CDMA macro cell or LTE macro cell or when reception levels of a neighbor W-CDMA macro cell and an LTE macro cell are low, the size of the W-CDMA cell formed by the dual femto-cell base station is almost the same as that of the LTE cell formed by the dual femto-cell base station, as shown in Fig. 4(A). Since the precondition that there are W-CDMA cells in the areas covered by LTE cells is satisfied, there is a high probability that CSFB according to Blind HO will succeed. For example, in the case of Fig. 4(A), there is a high probability that CSFB according to Blind HO from the LTE femto cell to the W-CDMA femto cell will succeed.

On the other hand, when there is no neighbor LTE macro cell or when a reception level of a neighbor LTE macro cell is low while a reception level of a neighbor W-CDMA macro cell is high, the size of the W-CDMA cell formed by the dual femto-cell base station is smaller than that of the LTE cell formed by the dual femto-cell base station, as shown in Fig. 4(B). When a mobile station is situated near the cell edge of the LTE system, CSFB according to Blind HO may end in failure. For example, in the case of Fig. 4(B), CSFB according to Blind HO from the LTE femto cell to the W-CDMA femto cell may end in failure.

While a dual femto-cell is taken as an example in Fig. 4, CSFB according to Blind HO may end in failure when there is no W-CDMA cell in the area covered by an LTE cell, regardless of whether a dual femto-cell is used.

In an embodiment of the present invention, a radio base station estimates a path loss value between a mobile station and the radio base station when a request for CSFB is received, and then determines whether a Measurement Procedure is needed upon CSFB. A configuration and an operation of a radio base station are described in detail below.

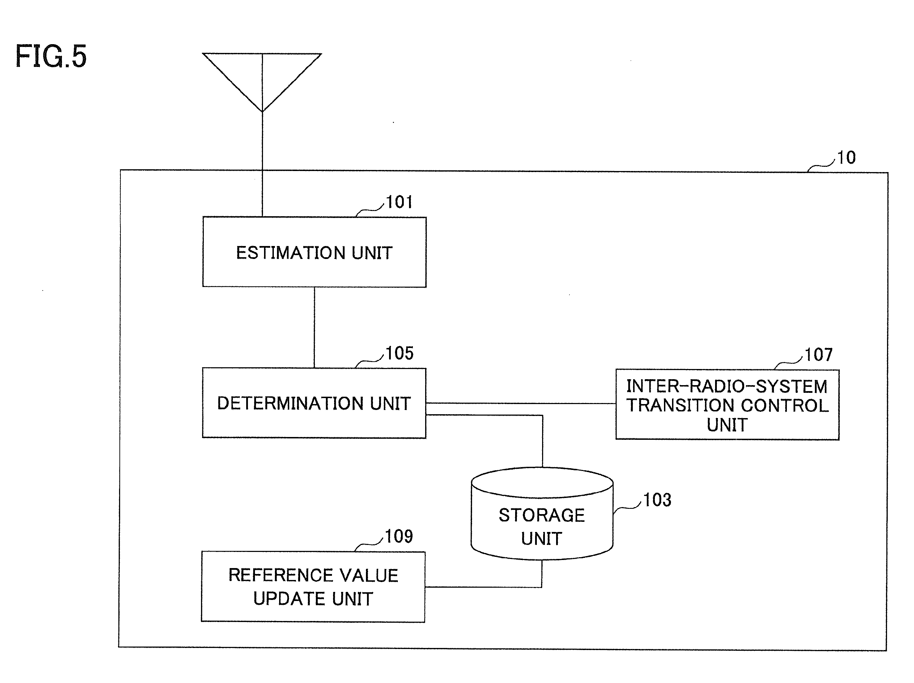

Fig. 5 shows a functional block diagram of a radio base station 10 in accordance with an embodiment of the present invention. The radio base station 10 is capable of communication in a plurality of radio systems. For example, the radio base station 10 may be a dual femto-cell base station which supports both a W-CDMA system and an LTE system. The radio base station 10 includes an estimation unit 101, a storage unit 103, a determination unit 105, and an inter-radio-system transition control unit 107. The radio base station 10 may further include a reference value update unit 109.

The estimation unit 101 measures information (signal) transmitted from a mobile station and estimates a propagation condition between the mobile station and the radio base station 10 when transition between radio systems is requested. For example, the estimation unit 101 estimates a path loss value or a propagation loss for the mobile station when a request for CSFB is received. The request for CSFB may be received from a switching center in response to originating or receiving a call for the mobile station. The estimation unit 101 provides the estimation result to the determination unit 105.

The storage unit 103 stores a reference value used for determining whether measurement of a radio wave is needed upon transition between radio systems. The reference value may be any value which is configured in advance as station data.

The determination unit 105 obtains the reference value from the storage unit 103 and determines whether measurement of a radio wave is needed upon transition by the mobile station between radio systems based on the estimated propagation condition. For example, when the estimated path loss value is above the reference value, it is determined that measurement of a radio wave is needed upon CSFB by the mobile station from the LTE system to the W-CDMA system. On the other hand, when the estimated path loss value is below the reference value, measurement of a radio wave is not needed upon CSFB by the mobile station from the LTE system to the W-CDMA system. In other words, it is determined that CSFB according to Blind HO is possible.

The inter-radio-system transition control unit 107 performs CSFB by making transition between radio systems in the mobile station and the radio base station 10 as well as in the radio base station 10 and the switching center.

The reference value update unit 109 updates the reference value based on the result of transition by the mobile station between radio systems. More specifically, when transition succeeds after measurement of a radio wave, that is, when CSFB accompanied by a Measurement Procedure succeeds, and when a cell to which the mobile station makes transition is the same as a predetermined cell, the reference value update unit 109 determines that the Measurement Procedure is not necessary. In this case, the reference value update unit 109 increases the reference value by a fixed value, for example. The predetermined cell is a candidate cell to which the mobile station makes transition when CSFB according to Blind HO is performed. The predetermined cell is configured in advance in the radio base station 10. For example, when CSFB is performed from an LTE femto cell to a W-CDMA femto cell, a candidate cell to which the mobile station makes transition may be the W-CDMA femto cell corresponding to the LTE femto cell. On the other hand, when CSFB accompanied by a Measurement Procedure succeeds and when a cell to which the mobile station makes transition is different from the predetermined cell, the reference value update unit 109 determines that the reference value is appropriate. In this case, the reference value update unit 109 does not update the reference value. In addition, when CSFB accompanied by a Measurement Procedure ends in failure, the reference value update unit 109 determines that the reference value is appropriate. In this case, the reference value update unit 109 does not update the reference value.

When transition without measurement of a radio wave ends in failure, that is, when CSFB according to Blind HO ends in failure, the reference value update unit 109 determines that the Measurement Procedure is needed. In this case, the reference value update unit 109 decreases the reference value by a fixed value, for example. On the other hand, when CSFB according to Blind HO succeeds, the reference value update unit 109 determines that the reference value is appropriate. In this case, the reference value update unit 109 does not update the reference value. When the reference value is updated, the updated reference value is stored in the storage unit 103 as a reference value for the next round of determination.

Next, a method of controlling transition between radio systems in accordance with an embodiment of the present invention is described below.

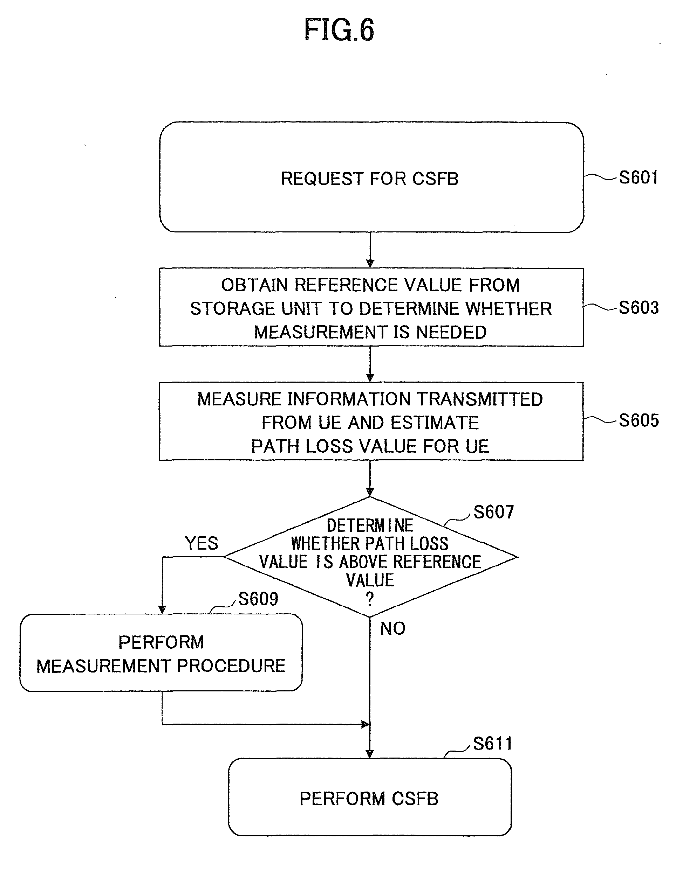

Fig. 6 shows a flowchart of determining whether measurement is needed upon CSFB in accordance of the present invention. This method is performed every time CSFB is requested. When a request for originating or receiving a call of a CS service is made to a mobile station situated in an LTE system, a radio base station receives a request for CSFB from a switching center (step S601).

The radio base station obtains from the storage unit a reference value to be used to determine whether measurement of a radio wave is needed upon CSFB (step S603). In addition, the radio base station measures information transmitted from a mobile station and estimates a path loss value for the mobile station (step S605).

When the path loss value is above the reference value (step S607: YES), the radio base station performs a Measurement Procedure (step S609), in which quality of a W-CDMA cell is measured. Then, CSFB is performed and the mobile station makes transition to the W-CDMA system (step S611).

When the path loss value is not above the reference value (step S607: NO), CSFB is performed without a Measurement Procedure and the mobile station makes transition to the W-CDMA system (step S611).

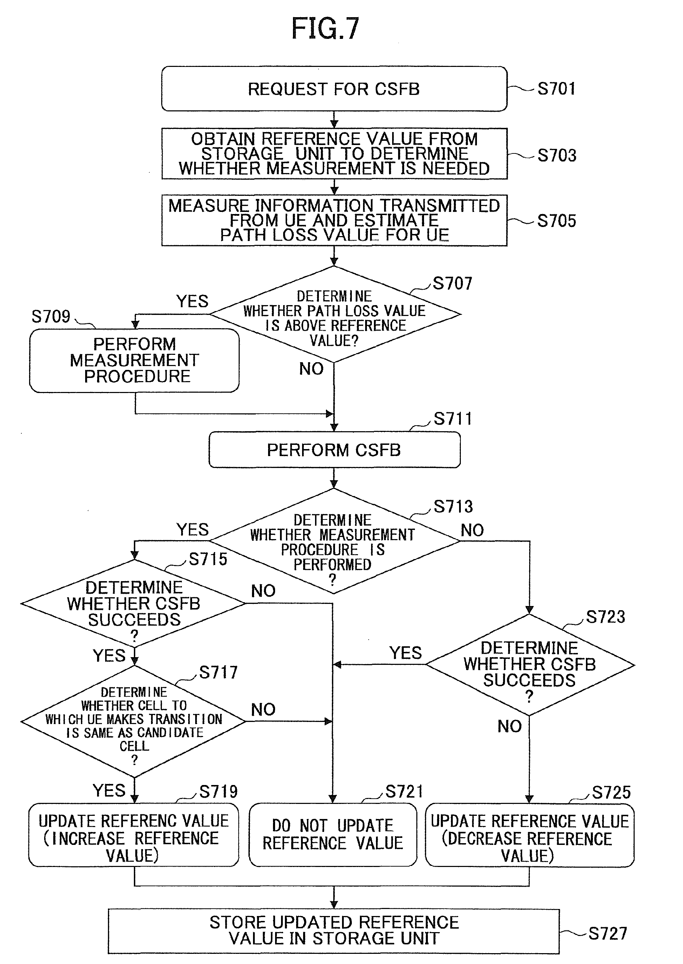

Fig. 7 shows a flowchart of determining whether measurement is needed upon CSFB in accordance of the present invention in the case where a reference value is updated. Steps S701-S711 in Fig.7 are the same as steps S601-S611 in Fig. 6. In Fig.7, after CSFB is performed in step S711, the radio base station determines whether a Measurement Procedure has been performed in step S709, that is, whether CSFB accompanied by a Measurement Procedure has been performed in step S711 (step S713).

The case where CSFB accompanied by a Measurement Procedure is performed (step S713: YES) is described below. When CSFB accompanied by a Measurement Procedure succeeds (step S715: YES) and the cell to which the mobile station makes transition is the same as a candidate cell to which the mobile station makes transition when CSFB according to Blind HO is performed (step S717: YES), it can be determined that the Measurement Procedure in step S709 is not necessary. In this case, the radio base station increases the reference value (step S719). On the other hand, when CSFB accompanied by a Measurement Procedure succeeds (step S715: YES) and when the cell to which the mobile station makes transition is different from the candidate cell (step S717: NO), it can be determined that the Measurement Procedure in step S709 is needed. In this case, it is determined that the reference value is appropriate and thus the reference value is not updated (step S721). In addition, when CSFB accompanied by a Measurement Procedure ends in failure (step S715: NO), it can be determined that the Measurement Procedure in step S709 is needed. In this case, it is determined that the reference value is appropriate and thus the reference value is not updated (step S721).

The case where CSFB accompanied by a Measurement Procedure is not performed, that is, the case where CSFB according to Blind HO is performed (step S713: NO) is described below. When CSFB according to Blind HO ends in failure (step S723: NO), it can be determined that the Measurement Procedure in step S709 is needed. In this case, the radio base station decreases the reference value (step S725). On the other hand, when CSFB according to Blind HO succeeds (step S723: YES), it can be determined that the Measurement Procedure in step S709 is not necessary. In this case, it is determined that the reference value is appropriate and thus the reference value is not updated (step S721). When the reference value is updated, the updated reference value is stored in a storage unit (step S727).

### <Effects of embodiments>

According to an embodiment of the present invention, failure of CSFB which is transition between radio systems can be reduced by determining whether measurement of a radio wave is needed upon transition between radio systems based on a propagation condition between a mobile station and a radio base station. In addition, an efficient CSFB scheme can be selected based on the propagation condition of the mobile station.

Furthermore, operational costs and labor costs associated with configurations of a large number of dual femto-cell base stations can be reduced by applying an embodiment of the present invention to the dual femto-cell base stations. Moreover, by updating a reference value based on success or failure of CSFB, failure of CSFB can be reduced. Also, a change in the environment of macro cells can be adapted to.

For convenience of explanation, the apparatus according to the embodiments of the present invention has been described with reference to functional block diagrams, but the apparatus may be implemented in hardware, software, or combinations thereof. In addition, two or more functional elements may be combined as appropriate.

For convenience of explanation, the method according to the embodiments of the present invention has been described with reference to flowcharts, but the method may be carried out in a different order from the order shown in the embodiments.

While the embodiments of the present invention are described above, the present invention is not limited to the these embodiments, and variations, modifications, alterations, and substitutions can be made by those skilled in the art without deviating from the spirit of the present invention.

The present international application is based on and claims the benefit of priority of Japanese Patent Application No. 2011-270715 filed on December 9, 2011, the entire contents of which are hereby incorporated by reference.

### [DESCRIPTION OF NOTATIONS]

- 10: radio base station
- 101: estimation unit
- 103: storage unit
- 105: determination unit
- 107: inter-radio-system transition control unit
- 109: reference value update unit

## Claims

1. A radio base station capable of communication in a first radio system and a second radio system, comprising:
an estimation unit arranged to measure information transmitted from a mobile station and estimate a propagation condition between the mobile station and the radio base station when transition from the second radio system to the first radio system is requested; and
a determination unit arranged to determine whether measurement of a radio wave is needed upon transition by the mobile station from the second radio system to the first radio system based on the propagation condition estimated by the estimation unit.

2. The radio base station as claimed in claim 1,
wherein the estimation unit estimates a path loss value for the mobile station, and the determination unit determines that measurement of the radio wave is needed upon transition by the mobile station from the second radio system to the first radio system, when the estimated path loss value is above a reference value.

3. The radio base station as claimed in claim 2, further comprising:
a reference value update unit arranged to update the reference value based on the result of transition by the mobile station from the second radio system to the first radio system.

4. The radio base station as claimed in claim 2,
wherein the reference value update unit increases the reference value when transition accompanied by measurement of a radio wave succeeds and a cell in the first radio system to which the mobile station makes transition is a same as a predetermined cell, and decreases the reference value when transition without measurement of a radio wave ends in failure.

5. A method of controlling transition between radio systems in a radio base station capable of communication in a first radio system and a second radio system, comprising the steps of:
measuring information transmitted from a mobile station and estimating a propagation condition between the mobile station and the radio base station when transition from the second radio system to the first radio system is requested; and
determining whether measurement of a radio wave is needed upon transition by the mobile station from the second radio system to the first radio system based on the propagation condition estimated in the measuring and estimating step.
